# EUROPEAN PATENT SPECIFICATION

(11) **EP 0 783 922 B1**
(45) Date of publication and mention of the grant of the patent: **29.03.2000**
(21) Application number: 97300136.5
(22) Date of filing: 10.01.1997
(51) Int. Cl.: B01J 19/00

(54) **Laboratory reactor apparatus for automated synthesis of peptides**
Laborreaktor zur automatisierten Peptidesynthese
Dispositif pour un réacteur de laboratoire pour la synthèse automatisée de peptides

(30) Priority: 11.01.1996 US 584660; 17.06.1996 US 665959
(43) Date of publication of application: 16.07.1997
(73) Proprietor: Tecan US, Research Triangle Park, North Carolina 27709 (US)
(72) Inventor: Juranas, David L., Bahama, North Carolina 27503 (US); Munn, Donald D., Raleigh, North Carolina 27608 (US); Anderson, Harry A., Raleigh, North Carolina 27612 (US)
(74) Representative: Woodward, John Calvin

(56) References cited:
- EP-A- 0 293 336
- WO-A-94/08711
- US-A- 4 252 769
- PATENT ABSTRACTS OF JAPAN vol. 008, no. 138 (C-231), 27 June 1984 & JP 59 048499 A (TORAY KK), 19 March 1984,

## Description

This invention relates to the automatically mechanized combining of chemical components and the synthesis and evaluation of compounds therefrom, and more particularly to a reactor flask used therefor and transmission of ingredients into and out of such flasks.

Contemporary chemical research and development involves the creation and evaluation of numerous chemical compounds from which a meager few emerge as ultimately successful commercial products. The classical portrait of a laboratory scientist selecting, mixing and, reacting chemical components and testing the resultant compounds has been largely replaced with modern, computerized machinery with robotic servers sequentially creating substantially all possible combinations to screen the multitudinous choices thoroughly. Automated synthesis has been acknowledged to be preferred in order to preclude accidentally missing an unobvious, but beneficial choice.

A particular system for selecting and combining ingredients, warming and agitating the mix and removing the resultant compound for evaluative testing is exemplified by GENESIS^{TM} robotic sample processors, supplied by Tecan US, Inc. of Research Triangle Park, North Carolina. The GENESIS^{TM} processor utilizes up to eight aspiration and injection tips mounted on a robotic arm. This sample processor is capable of transferring liquids to and from a multitude of reaction chambers and vials installed on the working surface of the instrument. The entire operation, including the washing of vessels between successive reaction cycles, is controlled by a programmed computer.

This automated processor is primarily directed to the solid phase synthesis of peptides and medicinal compounds using solid supports (resins). The resins are typically small beads ranging in size from 10 µm to 100 µm in diameter which include reactive sites for the covelant bonding of reactant molecules. Resins are added as a dry powder or in a solvebased slurry to individual reaction chambers. Through a series of building block additions and subsequent chemical reactions, the desired chemical compounds are synthesized. Excess reactants and by-products are removed from the reaction chambers by aspirating the liquids through a filtering frit, leaving the larger resin beads with covalently bonded molecules within the chamber. After the desired molecule is thus synthesized, it is cleaved off the resin bead by chemical reactions, leaving the desired molecule in solution. The isolated compound is then removed from the chamber through the filter frit, leaving the resin bead in the chamber.

In the prior art, the reaction chamber is typically a cavity formed within a Teflon reactor block. A sealing membrane, or septum, is affixed to the block to seal the top of the chamber. The bottom of the chamber is covered with a glass frit that allows the solvent to pass through to the bottom of the chamber, leaving the resin within. A tube is attached to each chamber below the glass frit extending upwardly to a height comparable to the top of the chamber and back down to the bottom of the block. The serpentine tubing serves as a trap, or valve, to prevent the solvent from draining out of the chamber. In the prior art, a transverse channel is machined into the block to connect a common pressurized inert gas source to all the chambers. When gas is introduced and a sufficient amount of pressure is applied 1406 kg/m² - 2109kg/m² (2-3 lb/in²), the liquid in the reaction chamber is forced through the frit and lower tubing, simultaneously evacuating all chambers of liquid, but leaving the resin within the chamber.

The known apparatus described has the drawback that the chemicals are in constant contact with the material of the block. The block materials of choice have been either stainless steel or TEFLON® (E.I. duPont De Numours Company) polytetrafluoroethylene resin, each having certain limitations. While stainless steel is substantially impervious to chemical attach, it is quite heavy and it conducts heat well. TEFLON® is fairly chemically inert, but will be affected by certain chemicals. With either material, the cleaning of tubing and machined holes is difficult and unreliable.

In the suction tube of the invention as well as that of the prior art, a sintered glass frit is fused in sealed relation to the lower end of the suction tube to act as filter to separate the resin crystals and remove the fluid from the flask. However, as a matrix of glass beads and interstitial cavities, the frit tends to act as a capillary when immersed into the liquid in the flask. As more fully described below, this capillary action tends to occlude the frit and upset the fluid control required in the reactor system, causing operational difficulties and distorted evaluations. In particular, when fluid is added to the flask from an inlet tube, due the saturated frit, fluid rises in the suction tube to become isolated from the rest of the reaction material.

Beside the cleaning problem discussed above, in order to maintain purity in the reactor vessel, the ingredients must be added from clean sources and the vessel sealed before and during the reaction cycle. A sealing membrane, or septum, typically covers the entrance to the inlet and outlet tubes. Instillation tips used must penetrate the septum, and the septum must be chemically inactive and sealable. Although a natural latex septum would provide an adequate seal, latex is not sufficiently impervious to chemical attack for general use. A better, and commonly used, choice for chemical purity is a TEFLON® coated-silicone rubber composite sheet. The silicone provides the resiliency needed for sealing and the TEFLON® provides the chemical inactivity. However, the TEFLON® is not a perfect choice for chemical resistance, as noted above, and the silicone does not close after penetration as well as a latex sheet. Since TEFLON® does exhibit some reactivity to the chemical agents, it is important to minimize the exposed surface area of the septum to the chemicals in the reaction chamber and remove the septum a distance from the reactive solvents.

It is therefore an object of this invention to overcome or substantially alleviate the aforementioned disadvantages.

It is known to provide apparatus for chemical synthesis comprising a reactor block having first and second channels passing therethrough, a reactor chamber in fluid communication with the first and second channels, a suction tube, sealing means for sealing the first and second channels, and filtration means.

Apparatus according to the present invention is characterised in that the reactor chamber comprises a vessel removably connected to the reactor block, the suction tube having a vent hole in the side thereof communicating the interior of the suction tube with the second channel, the filtration means being connected to a lower end of the suction tube, the sealing means including a first penetrable seal removably connected to the first channel and a second penetrable seal removably connected to one end of the second channel, said one end having an inside diameter different to the inside diameter at the other end of the second channel.

An embodiment of the invention will now be described, by way of example, with reference to the accompanying drawings, in which:

Figure 1 is a front elevation view of suction tube of the invention in which a segment of a constricted bore portion thereof is broken away for clarity.

Figure 2 is a front elevation view of a known fluid extraction needle used in conjunction with the invention.

Figure 3 is a front elevation view of a reactor block of the invention with a known reactor vial and a suction tube of Figure 1 having a segment thereof broken away to show a vent hole and with additional liquid flowing into the reactor vial and not rising in the suction tube.

Figure 4 illustrates the reactor apparatus of Figure 3 with the extraction needle of Figure 2 inserted slidingly within the narrow bore of the suction tube.

Figure 5 is an enlarged top plan view of a spacer formed with gas flow channels for use in the apparatus of the present invention.

Figure 6 is an enlarged view of a portion of Figure 3 with the addition of fluid pressure-indicating arrows for purposes of discussion.

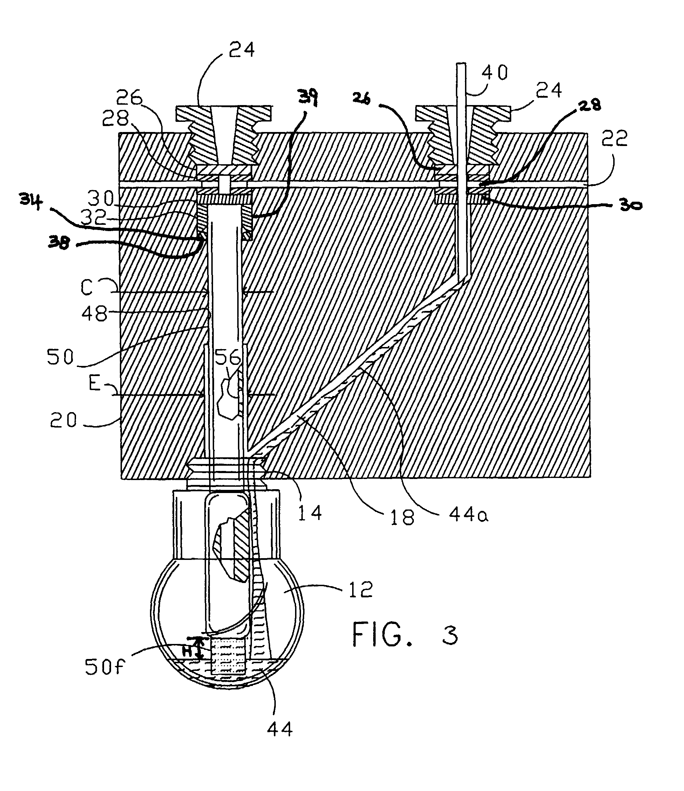

As shown in Figure 3, a suction channel 48 is formed so as to pass from an upper end to a lower end of reactor block 20 and has an enlarged upper portion with shoulder 38 and internal closure threads 39. Inlet channel 18 is formed through block 20 with its upper portion substantially parallel to and laterally offset from suction channel 48 and a lower portion at an angle so that the lower extremity of inlet channel 18 intersects suction channel 48 near its lowest point in reactor block 20. Vial-engaging threads 14 are formed within an enlarged lower portion of suction channel 48 to receive a reactor vial 12 and also accommodate the lower end of the angled lower portion of inlet channel 18. Reactor block 20 is preferably formed of a substantially inert material, such as stainless steel TEFLON®, depending primarily on the chemicals to be encountered.

Gas channel 22 is formed through reactor block 20 in an orientation to intersect an enlarged upper portion of inlet channel 18 and the enlarged upper portion of suction channel 48. In operation, gas channel 22 is filled with a low-reactivity gas, such as nitrogen or argon, under pressure. A flow-restrictive valve (not shown) is connected to an outlet end of gas channel 22 so as to maintain pressure therein. Suction tube 50 having a filtration medium 50f, such as, for example, a sintered glass frit at its lower end, is inserted snugly into suction channel 48 with its upper end residing above shoulder 38. Reactor vial 12 is assembled to the lower portion of suction channel 48 by means of screw threads 14 to enclose sintered glass frit 50f.

The suction tube 50 is secured and sealed into reactor block 20. An annular sealing member 34, e.g. an "o" ring, is placed snugly over the outer diameter of suction tube 50 to be in contact with substantially planar shoulder 38. Pressure washer 32, having an axial channel passing from an upper planar end and terminating at a lower end as an internally conical cavity, is placed so as to engage the upper portion of sealing member 34. A lower sealing member, such as lower septum 30, being substantially impervious to liquid passage, is next placed upon pressure washer 32. Lower septum 30 is preferably formed of a penetrable laminated sheet having a lower layer of a low reactivity polymer, e.g. TEFLON®, and an upper layer of a resilient polymer, e.g. silicone.

Spacer 28, shown in detail in Figure 5, is assembled on lower septum 30, with upper septum 26 place thereupon. Spacer 28, as shown in Figure 15, is disc-shaped with a pair of parallel, planar surfaces. An axial bore 62 passes perpendicularly through spacer 28 and a pair of diameter bores 64, 66 are formed to be mutually perpendicular and along a pair of axes in a plane substantially parallel to and between the planar surfaces of spacer 28. A channel 68 is formed to be open around the circumference of spacer 28. Bores 62, 64, 66 and channel 68 are mutually connected. When assembled into the apparatus of the invention, gas channel 22 is in fluid communication with diametral bores 64, 66 by way of circumferential channel 68 to establish a pressure in axial bore 62 for sealing lower septum 30 against leakage. Upper septum 26 is of a similar laminate and similar orientation, being substantially parallel to lower septum 30. Plug 24, having an internal conical entry 36 vertically formed through its centre and external threads is releasably attached into internal threads 39, applying sealing pressure to components 26, 28, 30, 32 and 34 described above.

When plug 24 is assembled with the sealing components as discussed above, spacer 28 resides so as to be substantially vertically centred on gas channel 22. According to the detail of spacer 28 shown in Figure 5, central bore 62 aligns with entry 36 of plug 24 and the inside diameter of suction tube 50. Perpendicularly related diametral bores 64 and 66 intersect central bore 62, and circumferential channel 68 is formed at the outer diameter of spacer 28 to connect the outer ends of bores 64 and 66. When assembled into reactor block 20 as described above, a pressurized gas in gas channel 22 enters circumferential channel 68 and through diametral bores 64, 66 establishes a pressure in the enclosed chamber so as to prevent leakage of chemical components through the respective upper and lower septa 26, 30.

The upper end of inlet channel 18 is sealed with a similar septum 30, spacer 28, septum 26 and plug 24. Thus assembled, reactor vial 12, inlet channel 18, suction channel 48 and suction tube 50 comprise a substantially sealed environment.

A hollow injecting needle 40 is inserted into the inlet channel 18, piercing through flexible septa 26, 30. A small amount of reactive slurry 44, comprising a chemical reactant suspended in a liquid, is shown within reactor vial 12. Sintered glass frit 50f extends from within slurry 44 to a distance H above the surface of slurry 44. Frit 50f is saturated with the liquid component of slurry 44 to height H due to the capillary action of the sintered glass matrix. The solid or semi-solid components of slurry 44 are filtered out by sintered glass frit 50f.

Additional slurry 44a is injected to the sealed system through needle 40, the additional pressure created causes the liquid component of the slurry in the absence of a vent hole (56) to rise within suction tube 50 by passing through saturated frit 50f. Chemical materials slurry 44b enclosed in suction tube 50 above frit 50f are isolated from the balance of the system which is in reactor 12, thus forming a separate, and less controllable, reactive environment. In practice, the material of which septa 26, 30 is made does not maintain a complete seal once it has been pierced by injecting needle 40. When lower septum 30 has been pierced, needle 40 is removed, and the gas is maintained under pressure in gas channel 22, some of the pressurized gas infiltrates inlet channel 18 forcing the liquid of slurry 44 further up suction tube 50f.

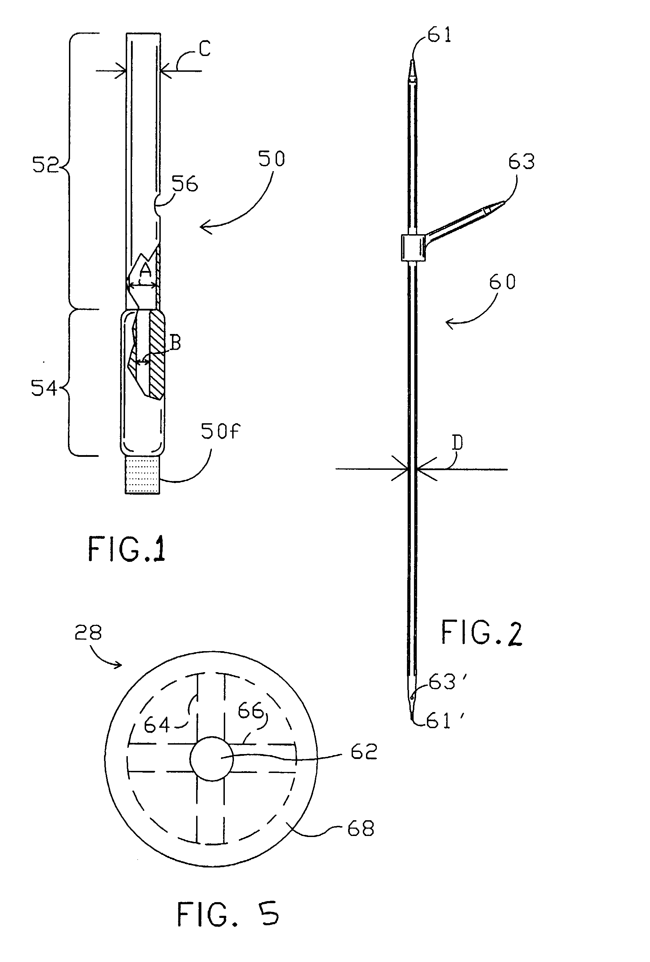

The suction filtration tube 50 is shown in greater detail in Figure 1, which is used in conjunction with a suction needle 60 of Figure 2. Suction tube 50 has an upper portion 52 with an inside diameter A which is substantially larger than diameter D of suction needle 60 (Figure 2). Upper portion 52 is connected coaxially to constricted portion 54 having an inside diameter B sufficient to slidingly receive the lower portion of suction needle 60. Whereas the inside diameter of upper portion 52 is somewhat large in the preferred embodiment, the invention recognises that tube 50 would function accordingly to the principles and objectives set out above with a constricted inside diameter throughout its length, such as diameter B. Constricted portion 54 is in turn connected coaxially to a filtration element, sintered glass frit 50f. A vent hole 56 of any convenient diameter is formed radially through the wall of full inside diameter portion 52. The outer diameter C of constricted portion 54 may be similar to or different than the outside diameter of full inside diameter portion 52. Constricted inside diameter B is formed to be minimally greater than the outer diameter D of suction needle 60 (Figure 2), nominally 0.1 mm (.004 inch). Frit 50 f is formed with a nominal pore size in the range of 70 - 100 µm. Suction needle 60 has concentric tubes with individual ports 61, 63 and respective lumen ports 61', 63'.

Referring again to Figure 3, the reactor block 20 has a suction channel 48 at a diameter C in its upper portion which will snugly receive and firmly hold suction tube 50. The lower portion of suction channel 48 is of a diameter E sufficient to maintain clear space around the outer diameter C of suction tube 50 for pressure equalization. The length of upper portion 52 is adequate to pass downward from lower septum 30 to within reactor flask 12, as the described components are assembled. Upper septum 26 is mounted on block 20 in parallel relation to lower septum 30 at a separation distance so as to communicate with gas channel 22. Inert gas passes under pressure between upper and lower septa 26, 30 which serve as sealing means to prevent leakage of the chemical components after the septa have been penetrated.

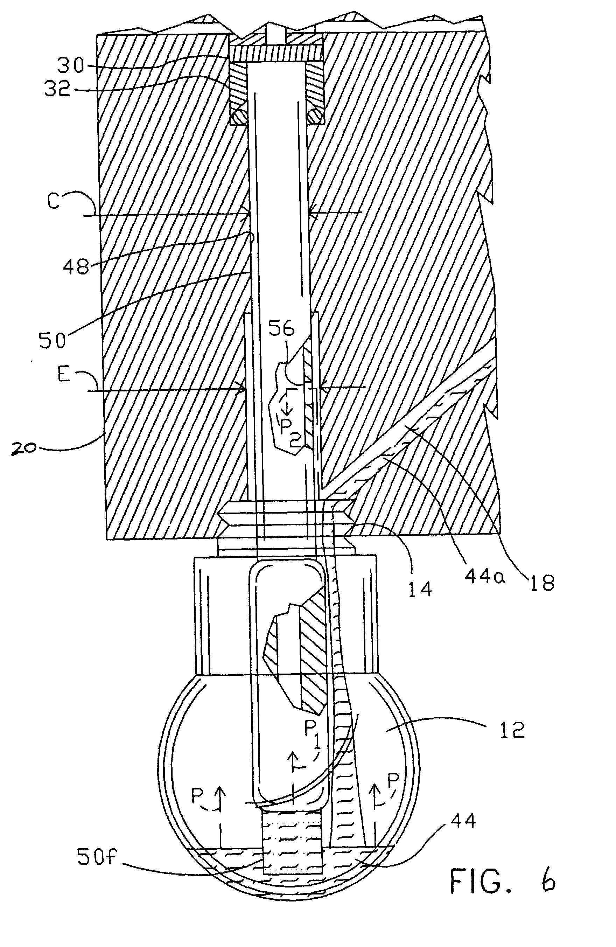

As seen in Figure 3, hollow injecting needle 40 has penetrated both upper and lower septa to enter inlet channel 18. Slurry 44 is flowing through inlet channel 18 to become slurry 44 within reactor vial 12. Frit 50f is saturated with capillary drawn liquid, but no liquid is contained in the portions of suction tube 50 above frit 50f. Figure 6 is an enlarged view of the significant portion of Figure 3 illustrated for greater detail. As slurry 44a flows into reactor vial 12 (or gas under pressure infiltrates through a perforated septum, as discussed above), upwardly directed pressure P is generated above the surface of slurry 44. This pressure is carried through saturated frit 50f, as indicated by arrow P₁. Simultaneously, the pressure generated above slurry 44 is transmitted through the space around suction tube 50 and within suction channel 48 to enter vent hole 56 as indicated by arrow P₂. Pressure P₁ and pressure P₂ are equal in magnitude and opposite in direction, resulting in equilibrium. Thus, a pressure balance is effected by the vented suction tube 50 together with the increased size of suction channel 48 during flow of fluid or leak of pressure into reactor vial 12.

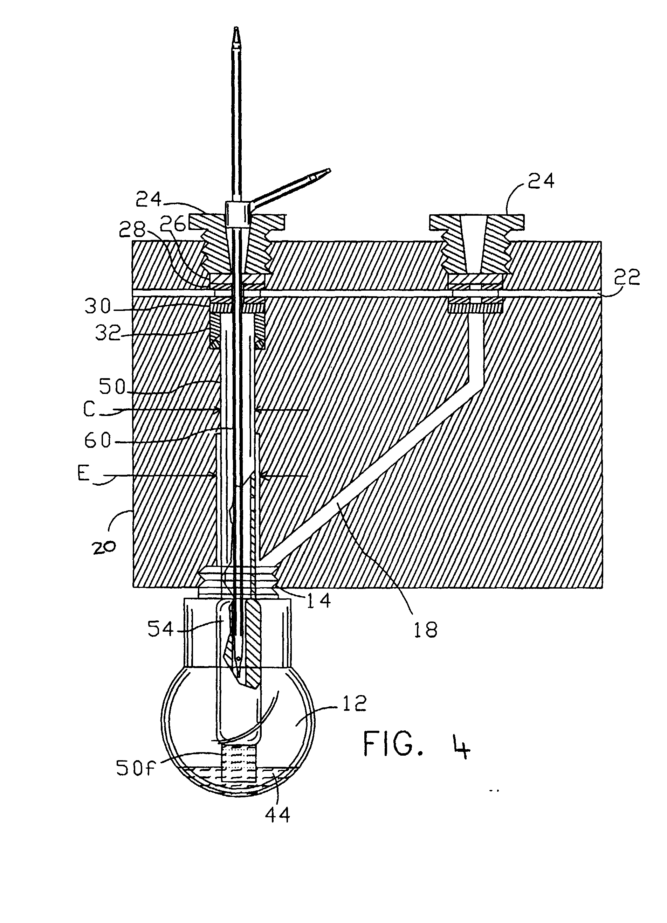

The suction needle 60, described above in relation to Figure 2, is shown in Figure 4 inserted into suction tube 50 through upper septum 26 and parallel lower septum 30 in position to remove a resultant chemical compound from reactor vial 12. As suction needle 60 is passed through constricted portion 54 of suction tube 50, the minimal diametral space is sufficiently small to achieve a capillary seal and thus prevent drawing gas into the needle 60 under vacuum. Suction needle 60 incorporates dual lumens, one of which allows entry of air or other gas, thus enabling a pressure equalization during removal of chemical product through the second lumen under vacuum.

## Claims

1. Apparatus for chemical synthesis comprising a reactor block (20) having first and second channels (18,48) passing therethrough, a reactor chamber in fluid communication with the first and second channels (18,48), a suction tube (50), sealing means for sealing the first and second channels (18, 48), and filtration means (50f), **characterised in that** the reactor chamber comprises a vessel (12) removably connected to the reactor block (20), the suction tube (50) having a vent hole (56) in the side thereof communicating the interior of the suction tube (50) with the second channel (48), the filtration means (50f) being connected to a lower end of the suction tube (50), the sealing means including a first penetrable seal (30) removably connected to the first channel (18) and a second penetrable seal (26) removably connected to one end of the second channel (48), said one end having an inside diameter different than the inside diameter at the other end of the second channel (48).

2. Apparatus according to claim 1, further comprising an annular sealing member (34) mounted circumferentially for securing said suction tube (50) within said second channel (48) and operative to seal said tube (50) to said reactor block (20).

3. Apparatus according to claim 1 or 2, wherein said first and second channels (18,48) in said reactor block (20) converge to an intersection in fluid communication with the reactor vessel (12) when connected to said reactor block (10).

4. Apparatus according to any of claims 1 to 3, wherein said filtration medium (50f) is formed with a nominal pore size between 70 - 100 µm.

5. Apparatus according to any preceding claim, further comprising a gas channel (22) formed in said reactor block (20) and connected between said first and second sealing means (26,30) and filled with a gas under pressure for preventing leakage of liquids through each said sealing means (26,30) after each sealing means (26,30) has been penetrated.

6. Apparatus according to claim 2, further comprising a pressure washer (32) mounted on said sealing means (30) and having an axial bore larger than the external diameter of said suction tube (50) and having an internal conical cavity.

7. Apparatus according to claim 5, wherein said gas has a low reactivity with respect to chemical ingredients intended for use in said apparatus.

## Patentansprüche

1. Vorrichtung zur chemischen Synthese, umfassend einen Reaktorblock (20) mit einem ersten und zweiten Kanal (18, 48), die durch diesen hindurchgehen, eine Reaktorkammer in Fluidverbindung mit dem ersten und zweiten Kanal (18, 48), ein Saugrohr (50), Abdichtungsmittel zum Abdichten des ersten und zweiten Kanals (18, 48) und Filtermittel (50f), dadurch gekennzeichnet, daß die Reaktorkammer ein Gefäß (12) umfaßt, das lösbar mit dem Reaktorblock (20) verbunden ist, wobei das Saugrohr (50) eine Entlüftungsöffnung (56) an seiner Seite aufweist, die das Innere des Saugrohres (50) mit dem zweiten Kanal (48) verbindet, wobei das Filtermittel (50f) an ein unteres Ende des Saugrohres (50) angeschlossen ist, wobei das Abdichtungsmittel eine erste durchdringbare Dichtung (30) umfaßt, die lösbar mit dem ersten Kanal (18) verbunden ist, und eine zweite durchdringbare Dichtung (26), die lösbar mit einem Ende des zweiten Kanals (48) verbunden ist, wobei das eine Ende einen Innendurchmesser aufweist, der sich von dem Innendurchmesser an dem anderen Ende des zweiten Kanals (48) unterscheidet.

2. Vorrichtung nach Anspruch 1, des weiteren umfassend ein ringförmiges Dichtungselement (34), das in Umfangsanordnung zur Halterung des Saugrohres (50) in dem zweiten Kanal (48) befestigt ist und zur Abdichtung des Rohres (50) gegenüber dem Reaktorblock (20) dient.

3. Vorrichtung nach Anspruch 1 oder 2, wobei der erste und zweite Kanal (18, 48) in dem Reaktorblock (20) bei daran angeschlossenem Reaktorgefäß (12) zu einer Schnittstelle hin zusammenlaufen, die in Fluidverbindung mit dem Reaktorgefäß (12) steht.

4. Vorrichtung nach einem der Ansprüche 1 bis 3, wobei das Filtermedium (50f) mit einer nominalen Porengröße von 70 bis 100 µm ausgebildet ist.

5. Vorrichtung nach einem der vorangehenden Ansprüche, des weiteren umfassend einen Gaskanal (22), der in dem Reaktorblock (20) ausgebildet und zwischen dem ersten und zweiten Dichtungsmittel (26, 30) angeschlossen ist und mit einem druckbeaufschlagten Gas gefüllt ist, um ein Lecken von Flüssigkeiten durch jedes der Dichtungsmittel (26, 30) zu verhindern, nachdem jedes Dichtungsmittel (26, 30) durchbohrt wurde.

6. Vorrichtung nach Anspruch 2, des weiteren umfassend eine Druckdichtung (32), die auf dem Dichtungsmittel (30) montiert ist und eine axiale Bohrung aufweist, die größer als der Außendurchmesser des Saugrohres (50) ist, und einen inneren, konischen Hohlraum aufweist.

7. Vorrichtung nach Anspruch 5, wobei das Gas eine geringe Reaktionsfähigkeit in bezug auf chemische Inhaltsstoffe aufweist, deren Verwendung in der Vorrichtung beabsichtigt ist.

## Revendications

1. Appareillage pour la synthèse chimique, constitué par un bloc réacteur (20) traversé par un premier canal (18) et un second canal (48), une chambre de réaction en communication fluidique avec le premier et le second canaux (18, 48), un tube à aspiration (50), des moyens hermétiques pour l'étanchéisation du premier et du second canaux (18, 48), et des moyens de filtration (50f), **caractérisé en ce que** la chambre de réaction est constituée par une enceinte (12) connectée de manière séparable au bloc réacteur (20), le tube d'aspiration (50) présentant latéralement un orifice de décharge (56) faisant communiquer l'intérieur du tube à aspiration (50) avec le second canal (48), les moyens de filtration (50f) étant connectés à une extrémité inférieure du tube à aspiration (50), les moyens hermétiques se composant d'un premier élément hermétique pénétrable (30) connecté de manière séparable au premier canal (18) et d'un second élément hermétique pénétrable (26) connecté de manière séparable à une extrémité du second canal (48), ladite extrémité ayant un diamètre intérieur différent du diamètre intérieur à l'autre extrémité du second canal (48).

2. Appareillage selon la revendication 1, comprenant au surplus un élément hermétique annulaire (34) monté circonférentiellement pour immobiliser ledit tube à aspiration (50) à l'intérieur dudit second canal (48) et assurant l'étanchéité dudit tube (50) vis-à-vis dudit bloc réacteur (20).

3. Appareillage selon la revendication 1 ou 2, dans lequel lesdits premier et second canaux (18, 48) dudit bloc réacteur (20) convergent vers une intersection en communication fluidique avec l'enceinte de réaction (12) quand ils sont connectés audit bloc réacteur (20).

4. Appareillage selon l'une quelconque des revendications 1 à 3, dans lequel ledit milieu de filtration (50f) est formé avec une taille nominale de pores comprise entre 70 et 100 µm.

5. Appareillage selon l'une quelconque des revendications précédentes, comprenant au surplus un canal à gaz (22) pratiqué dans ledit bloc réacteur (20) et connecté entre le premier et le second élément hermétique (26, 30) et rempli avec un gaz sous pression pour prévenir les fuites de liquide à travers chacun desdits éléments hermétiques (26, 30), après que chaque élément hermétique (26, 30) ait été pénétré.

6. Appareillage selon la revendication 2, comprenant au surplus un manchon sous pression (32) monté sur lesdits éléments hermétiques (30) et ayant un calibre axial plus grand que le diamètre externe dudit tube à aspiration (50) et ayant une cavité conique intérieure.

7. Appareillage selon la revendication 5, dans lequel ledit gaz a une réactivité faible vis-à-vis des ingrédients chimiques destinés à être mis en oeuvre dans ledit appareillage.
